# FASCICULE DE BREVET EUROPEEN

(11) **EP 2 581 260 B1**
(45) Date de publication et mention de la délivrance du brevet: **13.07.2016**
(21) Numéro de dépôt: 12188199.9
(22) Date de dépôt: 11.10.2012
(51) Int. Cl.: B60N 2/66, B61D 33/00, B60N 2/22

(54) **Siège passager pour véhicule ferroviaire de transport**
Passagiersitz für Transportschienenfahrzeug
Passenger seat for railway transport vehicle

(30) Priorité: 12.10.2011 FR 1159207
(43) Date de publication de la demande: 17.04.2013
(73) Titulaire: SNCF MOBILITES, 93200 Saint-Denis (FR)
(72) Inventeur: Perdriel, Philippe, 92170 Vanves (FR); Gallais, Cédric, 27950 Saint Marcel (FR)
(74) Mandataire: Gevers & Orès

(56) Documents cités:
- EP-A1- 0 016 937
- EP-A1- 1 946 958
- US-A- 3 572 829
- US-A1- 2006 082 182

## Description

La présente invention concerne le domaine des sièges pour les passagers d'un véhicule ferroviaire de transport, en particulier, pour un véhicule ferroviaire du type TGV ® pour « train à grande vitesse ».
Un siège passager comporte de manière classique une assise, sensiblement horizontale, sur laquelle est articulé un dossier, sensiblement vertical, l'assise et le dossier étant tous les deux montés sur un châssis rigide de guidage formant l'ossature du siège. Traditionnellement, le siège comporte plusieurs positions différentes pour permettre au passager d'adopter la position la plus adéquate lorsqu'il se repose (position de repos) ou, par exemple, lorsqu'il utilisé un ordinateur portable (position de travail).
Les documents US2006/082182 et EP0016937 décrivent un siège comprenant un châssis sur lequel sont guidés un dossier et une assise.
En position de travail, l'angle de siège, défini entre l'assise et le bas de dossier, est de l'ordre de 115° ce qui permet au passager de conserver son dos sensiblement droit lors de l'utilisation de son ordinateur portable ou lors de la lecture d'un livre. En position de repos, l'angle du siège est de l'ordre de 125° pour permettre au passager de s'allonger. Pour basculer de la position de travail à la position de repos, le siège comporte de manière classique un ou plusieurs vérins, commandés par l'utilisateur à l'aide d'une manette, qui viennent guider l'inclinaison du dossier et ainsi augmenter l'angle du siège. Lors de l'inclinaison, l'assise du siège se déplace vers l'avant afin que le dossier du siège n'empiète que faiblement sur l'espace dédié au passager assis sur un siège situé à l'arrière.
Pour améliorer le confort des passagers, il a été proposé d'augmenter l'angle de siège en position de repos, Pour ce faire, une solution immédiate consiste à augmenter la distance entre deux rangées de sièges, c'est-à-dire le pas de siège, afin de ménager suffisamment de place à l'assise pour se translater horizontalement vers l'avant pour permettre une forte inclinaison du dossier. Une telle solution n'est pas envisageable car une augmentation du pas de siège diminue le nombre de sièges de passager par voiture et par conséquent augmente le coût du voyage par passager.

Par ailleurs, pour un véhicule ferroviaire comportant des sièges alignés en file, un siège passager selon l'art antérieur ne permet pas à des personnes à mobilité réduite d'accéder à un siège situé à proximité de la fenêtre, l'assise du siège situé à proximité du couloir empêchant la circulation du passager. Une solution immédiate serait d'augmenter le pas de siège mais cela augmente le coût du voyage par passager.
Afin d'éliminer au moins certains de ces inconvénients, l'invention concerne un siège de passager selon la revendication 1. Il est décrit un siège de passager pour véhicule de transport, notamment ferroviaire, comportant un châssis structural, une assise et un dossier articulé sur l'assise, l'assise et le dossier étant guidés par le châssis structural, le dossier comportant au moins une partie supérieure et une partie inférieure articulées entre elles, la partie inférieure du dossier étant articulée sur l'assise autour d'une liaison pivot et guidée dans le châssis structural entre au moins une position de travail et au moins une position de repos du siège, l'angle d'ouverture du siège, définie entre la partie inférieure du dossier et l'assise, étant supérieure en position de repos qu'en position de travail.

Un dossier en deux parties permet ainsi de former un dossier dont la courbure est régulière en position de repos tout en permettant qu'il demeure droit en position de travail. Les parties du dossier possèdent en outre des angles d'inclinaison différents par rapport à la direction horizontale. En augmentant l'inclinaison de la partie inférieure du dossier, on limite de manière avantageuse l'inclinaison de la partie supérieure du dossier ce qui entraîne une diminution globale de l'encombrement du siège. Cela permet d'obtenir un grand angle d'ouverture du siège en position de repos tout en limitant l'avancée de l'assise. Ainsi, le confort du passager est amélioré sans augmenter la distance entre deux rangées de sièges, c'est-à-dire, le pas de siège.

De manière préférée, l'assise est guidée en translation dans le châssis structural de manière à limiter l'encombrement du siège lorsqu'il est en position de repos.
Le châssis structural comporte au moins deux rainures de guidage du dossier, la partie inférieure du dossier comportant au moins un doigt de guidage monté dans chaque rainure de guidage du châssis, lesdits doigts de guidage sont agencés pour se translater dans lesdites rainures de guidage du dossier de manière à définir la position angulaire de la partie inférieure du dossier lors de son guidage entre la position de travail et la position de repos. La partie inférieure du dossier ne possède qu'une unique liberté de mouvement dans le châssis ce qui permet de régler avec précision sa position angulaire et donc la courbure du siège.
De manière préférée, lesdites rainures de guidage du dossier sont rectilignes et s'étendent obliquement l'une par rapport à l'autre. Autrement dit, les rainures de guidage du dossier ne sont pas parallèles. De manière préférée, lesdits doigts de guidage sont parallèles. De préférence encore, les doigts de guidage sont écartés d'une distance fixe au cours de la manipulation du siège. L'articulation de la partie inférieure du dossier est ainsi réalisée autour de deux axes se translatant parallèlement entre eux par coulissement dans les rainures de guidage du dossier, permettant ainsi un basculement faiblement consommateur de l'espace arrière du siège.
De préférence encore, l'épaisseur d'un doigt de guidage est sensiblement égale à celle de la rainure de guidage du dossier dans lequel il est monté. Le jeu de fonctionnement est alors faible ce qui limite tout mouvement angulaire de la de la partie inférieure du dossier dans les rainures de guidage.

De préférence, le châssis structural comporte au moins deux supports latéraux, chaque support latéral comportant deux rainures de guidage du dossier de manière à guider le dossier de manière précise et équilibrée. De préférence encore, la rainure de guidage du dossier située en position inférieure est plus longue que la rainure de guidage située en position supérieure de manière à augmenter l'angle du siège tout en limitant l'avancée de l'assise.

De manière avantageuse, la partie supérieure du dossier est reliée à la partie inférieure du dossier par une liaison pivot ce qui permet d'assurer une continuité dans la courbure du siège tout en permettant à la partie inférieure d'entraîner la partie supérieure du dossier lors de la manipulation du siège.

Selon un aspect de l'invention, le siège comporte des moyens de pivotement de l'assise vers le dossier du siège pour une position donnée du siège. Pour toute position du siège (position de repos, position de travail ou position intermédiaire), l'assise peut pivoter pour être repliée vers le dossier ce qui permet de diminuer l'avancée de l'assise. Le passage de personnes à mobilité réduite est alors avantageusement facilité.

De préférence, le châssis structural comporte au moins une rainure de guidage de l'assise agencée pour guider la course de l'assise lors de son guidage entre la position de travail et la position de repos. Ainsi, l'assise demeure sensiblement horizontale pour toute position du siège ce qui assure le confort du passager.

De préférence encore, l'assise comportant au moins un doigt de guidage monté dans la rainure de guidage de l'assise, l'épaisseur du doigt de guidage est inférieure à celle de la rainure de guidage de l'assise de manière à autoriser un pivotement de l'assise et ainsi le passage de personnes à mobilité réduite.

Selon un aspect préféré, le siège comporte un vérin monté entre l'assise et le châssis structural agencé pour déplacer l'assise entre la position de travail et la position de repos. Un vérin, de préférence, pneumatique, permet de faciliter la modification de la position du siège. En outre, un déplacement de l'assise permet avantageusement un déplacement coordonné des parties inférieure et supérieure du dossier.

De préférence encore, le siège comporte un vérin monté entre la partie inférieure du dossier et le châssis structural agencé pour déplacer la partie inférieure du dossier entre la position de travail et la position de repos.

De préférence, la partie inférieure du dossier comporte au moins deux barres latérales parallèles qui sont incurvées de manière à favoriser une courbure régulière du siège et à réduire la longueur de l'assise qui s'étend dans la continuité de la partie inférieure du dossier.

L'invention sera mieux comprise à la lecture de la description qui va suivre, donnée uniquement à titre d'exemple, et se référant aux dessins annexés sur lesquels :
- la figure 1 est une représentation schématique de la structure d'un siège selon l'invention ;
- la figure 2 est une vue de côté du siège de la figure 1 ;
- la figure 3 est une vue en perspective rapprochée de la partie inférieure du dossier du siège de la figure 1 ;
- la figure 4A est une représentation schématique de côté du siège de la figure 1 en position de repos ; et
- la figure 4B est une représentation schématique de côté du siège de la figure 1 en position de travail.

Il faut noter que les figures exposent l'invention de manière détaillée pour mettre en oeuvre l'invention, lesdites figures pouvant bien entendu servir à mieux définir l'invention le cas échéant.

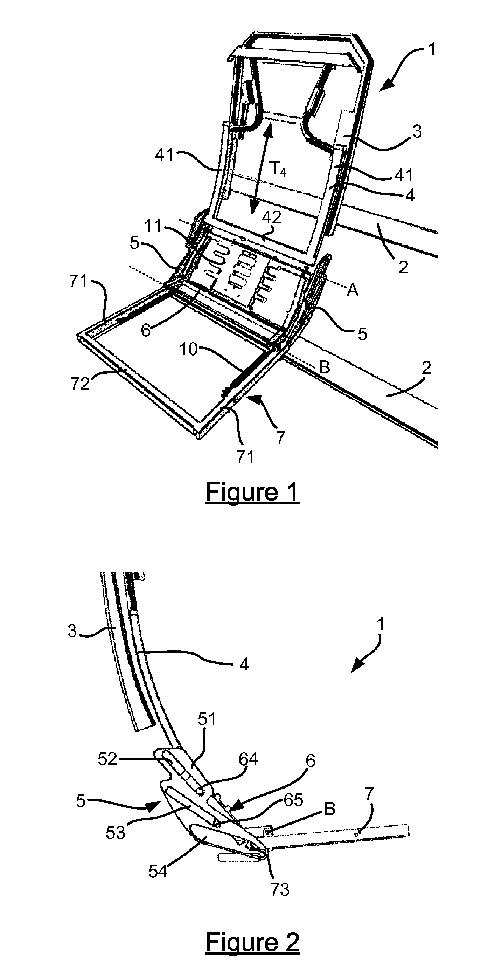

Un siège 1 de passager pour véhicule ferroviaire selon l'invention est représenté de manière schématique sur la figure 1. Par souci de clarté, le revêtement du siège 1 (mousses, etc.) n'a pas été représenté de manière à ce que sa structure interne soit visible.

Le siège 1 comprend un châssis structural qui est solidaire du véhicule ferroviaire (non représenté). Dans cet exemple, le châssis structural comporte des traverses transversales 2 sur lesquelles peuvent être montées un ou deux sièges 1. Les traverses transversales 2 sont de préférence solidarisées entres elles et montées au plancher du véhicule ferroviaire via un pied de fixation (non représenté).

Le châssis structural comporte en outre un châssis supérieur 3, qui s'étend sensiblement verticalement et qui est fixé solidairement à une traverse supérieure 2, et un châssis inférieur 5, qui s'étend obliquement et qui est fixé solidairement à une traverse inférieure 2 comme représenté sur les figures 1 et 2.

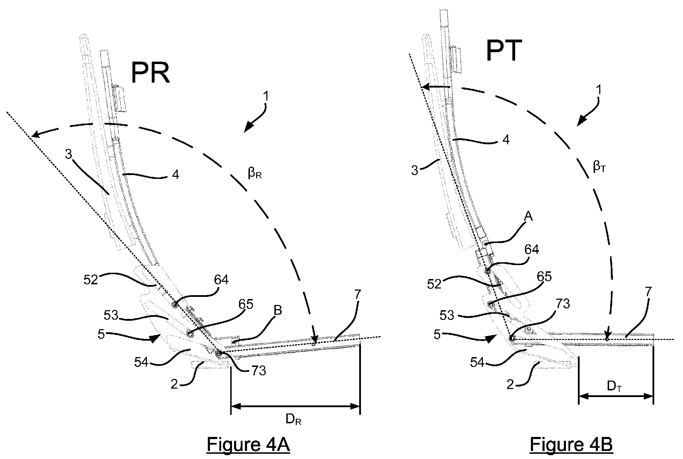

Toujours en référence à la figure 1, le siège 1 comprend une assise 7 s'étendant sensiblement horizontalement et un dossier articulé sur l'assise 7, le dossier s'étendant sensiblement verticalement pour permettre de supporter le dos d'un passager assis sur l'assise 7. Par la suite, on définit l'angle d'ouverture β du siège 1 comme l'angle formé entre la partie inférieure du dossier 6 et l'assise 7 comme représenté sur les figures 4A et 4B. En effet, comme la partie inférieure du dossier 6 et l'assise 7 s'étendent respectivement dans des plans, l'angle d'ouverture β du siège 1 correspond à l'angle formé entre les deux plans.

Le siège 1 permet de définir au moins une position de repos PR dans laquelle l'angle d'ouverture β_{R} est de l'ordre de 125° et dans laquelle l'assise 7 est avancée et le dossier est incliné par rapport à la position verticale comme représenté sur la figure 4A. La position de repos PR permet au passager d'allonger son corps pour se reposer. En effet, la position de repos PR permet de se rapprocher de la position couchée tout en limitant l'encombrement du siège 1 dans la direction horizontale de manière à ne pas diminuer le pas de siège dans le véhicule ferroviaire.

Le siège 1 permet de définir au moins une position de travail PT dans laquelle l'angle d'ouverture β_{T} est de l'ordre de 115° et dans laquelle l'assise 7 est reculée et le dossier est relevé, proche de la position verticale, comme représentée sur la figure 4B. La position de travail PT permet d'assurer une posture adaptée pour le passager lorsque celui-ci est en train, par exemple, de lire ou d'utiliser un ordinateur portable ou une tablette.

Afin de permettre une posture adaptée au repos du passager tout en conservant un pas de siège de valeur réduite, le dossier comporte une partie supérieure 4 et une partie inférieure 6 qui sont articulées entre elles de manière à augmenter l'angle du siège β tout en limitant l'avancée de l'assise 7. Dans l'art antérieur, l'angle du siège β croissait linéairement avec l'avancée de l'assise ce qui pénalisait le pas de siège. Grâce à l'invention, la partie inférieure du dossier 6 permet d'augmenter l'angle du siège β tout en limitant l'avancée de l'assise 7.

L'invention a été ici présentée avec un dossier en deux parties mais il va de soi qu'il pourrait en comprendre plus de deux, par exemple, trois.

### • Partie supérieure 4 du dossier

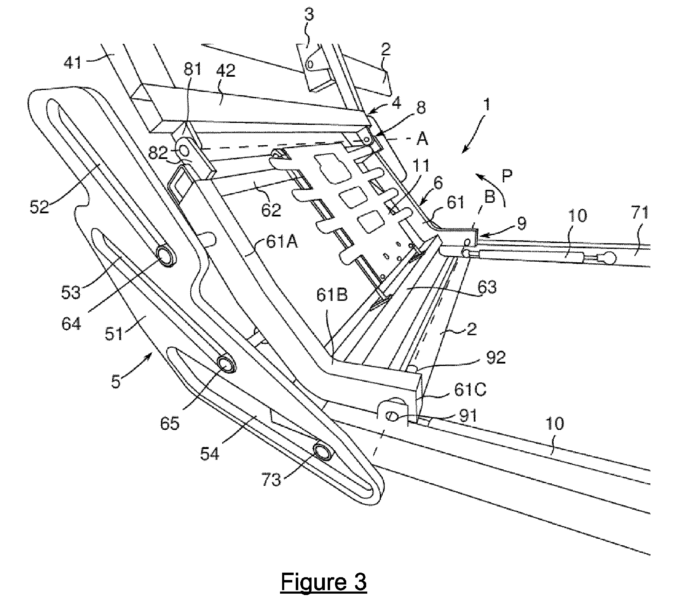

En référence aux figures 1 et 3, la partie supérieure 4 du dossier se présente sous la forme d'un cadre de forme rectangulaire et sensiblement incurvé de manière à épouser la forme du dos du passager. La partie supérieure 4 comporte deux barres latérales parallèles 41 qui s'étendent verticalement et qui sont guidées dans des glissières latérales du châssis supérieur 3, la translation de la partie supérieure 4 du dossier par rapport au châssis supérieur 3 étant représentée par une flèche T₄ sur la figure 1. De manière préférée, un vérin pneumatique (non représenté) est placé entre la partie inférieure 6 du dossier et le châssis supérieur 3 pour faciliter le déplacement de la partie inférieure du dossier 6 entre la position de travail et la position de repos. L'extrémité inférieure de la partie supérieure 4 du dossier comporte une barre transversale 42 reliant les barres latérales verticales 41 comme représenté sur la figure 3. La barre transversale 42 est articulée à la partie inférieure 6 du dossier de manière à autoriser un pivotement autour d'un axe transversale A. Les moyens d'articulation 8 de la partie inférieure 6 du dossier sur sa partie supérieure 4 seront présentés par la suite lors de la description de la partie inférieure 6 du dossier.

De manière préférée, un appui-tête est fixé à l'extrémité supérieure de la partie supérieure 4 du dossier de manière à améliorer le confort de l'utilisateur en position de repos PR comme en position de travail PT.

### • Partie inférieure 6 du dossier

En référence aux figures 1 et 3, la partie inférieure 6 du dossier comporte deux barres latérales parallèles 61 qui sont incurvées. Dans cet exemple, chaque barre latérale 61 possède successivement une première partie rectiligne d'extrémité 61A, une partie incurvée 61B et une deuxième partie rectiligne d'extrémité 61C comme représenté sur la figure 3. L'angle de courbure d'une barre latérale 61 est de l'ordre de 125° de manière à ce que le siège possède une courbure régulière lorsqu'il est en position de repos PR ou en position de travail PT.

Les barres latérales 61 sont reliées, au niveau de la première partie rectiligne 61A, par une barre transversale supérieure 62 et, au niveau de la partie incurvée 61 B, par une barre transversale intermédiaire 63.

Dans cet exemple, en référence à la figure 3, les moyens d'articulation 8 des parties inférieure 6 et supérieure 4 du dossier autour de l'axe A se présentent sous la forme de languettes articulées montées latéralement au siège 1. Comme représenté sur la figure 3, chaque languette articulée comporte une première extrémité 81 fixée solidairement à la barre transversale 42 de la partie supérieure 4 du dossier et une deuxième extrémité 82 fixée solidairement à la barre transversale supérieure 62 de la partie inférieure 6 du dossier. De tels moyens d'articulation 8 présentent un coût de revient faible et sont simples à entretenir.

La partie inférieure 6 du dossier est articulée à l'assise 7 de manière à autoriser un pivotement autour d'un axe transversale B comme représenté sur la figure 3. Les moyens d'articulation des parties inférieure 6 et de l'assise 7 seront présentées par la suite lors de la description de l'assise 7.

Afin que l'angle d'ouverture β du siège 1 soit défini de manière précise pour permettre un confort optimal du passager, la partie inférieure 6 du dossier est guidée dans le châssis inférieur 5 comme représenté en détails sur les figures 2 et 3. Dans cet exemple, le châssis inférieur 5 comporte deux supports 51 qui s'étendent latéralement et extérieurement à la partie inférieure 6 du dossier. Chaque support 51 comprend trois rainures rectilignes de guidage 52, 53 et 54 qui permettent de guider la partie inférieure 6 du dossier ainsi que l'assise 7.

Par la suite, un unique support 51 du châssis inférieur 5 est décrit, les supports 51 étant symétriques l'un par rapport à l'autre comme représenté sur la figure 3.

La première rainure de guidage 52 du support 51, située en position supérieure, s'étend obliquement par rapport à l'axe vertical et forme un angle d'environ 138° par rapport à ce dernier. La deuxième rainure de guidage 53 du support 51, située en position intermédiaire, s'étend obliquement par rapport à l'axe vertical et forme un angle d'environ 125° par rapport à ce dernier.

La troisième rainure de guidage 54 du support 51, située en position inférieure, s'étend obliquement par rapport à l'axe vertical et forme un angle d'environ 106° par rapport à ce dernier.

Les première et deuxième rainures de guidage 52, 53 vont être maintenant présentées en détails pour le guidage de la partie inférieure 6 du dossier. La troisième rainure de guidage 54 sera présentée par la suite avec l'assise 7.

Les première et deuxième rainures de guidage 52, 53 permettent de guider l'inclinaison de la partie inférieure 6 du siège entre les positions de travail PT et de repos PR. Dans cet exemple, la partie inférieure 6 comporte des premiers et deuxièmes doigts de guidage 64, 65 agencés pour se translater respectivement dans les première et deuxième rainures de guidage 52, 53 du châssis inférieur 5. En référence à la figure 3, un premier doigt de guidage 64 est fixé à l'extrémité supérieure de la première partie rectiligne 61A de chaque barre latérale 61 de la partie inférieure 6 du dossier. De manière similaire, un deuxième doigt de guidage 65 est fixé à la première partie rectiligne 61A de chaque barre latérale 61 à proximité de sa partie incurvée 61 B. Les premiers et deuxièmes doigts de guidage 64, 65 s'étendent de manière rectiligne en direction des supports 51 du châssis inférieur 5. Les premiers doigts de guidage 64 forment un premier axe de guidage dans les premières rainures 52 des supports 51 tandis que les deuxièmes doigts de guidage 65 forment un deuxième axe de guidage dans les deuxièmes rainures 53 des supports 51. Un tel assemblage limite les déplacements de la partie inférieure 6 du dossier. En effet, un axe de guidage ne peut se déplacer que selon une trajectoire rectiligne (rainure de guidage) et son déplacement définit la position de l'autre axe de guidage étant donné que les axes sont solidaires de la partie inférieure 6. Il en résulte que la partie inférieure du dossier 6 ne possède qu'un unique degré de liberté et son inclinaison angulaire est parfaitement définie pour toute position du siège 1.

Les premiers et deuxièmes doigts de guidage 64, 65 possèdent une épaisseur sensiblement égale à l'épaisseur des première et deuxième rainures de guidage 52, 53 de manière à ce que le guidage soit précis en limitant le jeu de guidage. Grâce aux deux rainures de guidage 52, 53, l'inclinaison angulaire de la partie inférieure 6 du dossier est parfaitement définie, seule un jeu fonctionnel de guidage étant autorisé. Lorsque les premiers et deuxièmes doigts de guidage 64, 65 sont en butée inférieure dans leurs première et deuxième rainures de guidage 52, 53, le siège 1 est en position de repos PR tandis qu'il est en position de travail PT lorsque les premiers et deuxièmes doigts de guidage 64, 65 sont en butée supérieure. La manipulation du siège 1 entre ses différentes positions sera présentée par la suite.

De préférence, la longueur de la deuxième rainure rectiligne de guidage 53 est supérieure à celle de la première rainure rectiligne de guidage 52 de manière à augmenter l'angle du siège sur une course réduite de l'assise 7.

### • Assise 7

En référence à la figure 1, l'assise 7 comporte deux barres latérales parallèles 71 qui s'étendent sensiblement horizontalement et une barre transversale 72 reliant les extrémités avant des barres latérales 71.

Dans cet exemple, en référence à la figure 3, les moyens d'articulation 9 de la partie inférieure 6 du dossier et de l'assise 7 autour de l'axe B se présentent sous la forme d'axes montés latéralement au siège 1. Comme représenté sur la figure 3, la partie arrière de chaque barre horizontale 71 de l'assise 7 comporte une languette verticale 91 reliée à la barre latérale 61 de la partie inférieure 6 du dossier par une tige 92 traversant sa partie rectiligne 61C dans sa direction transversale. De tels moyens d'articulation 9 présentent un coût de revient faible et sont simples à entretenir.

L'extrémité arrière de chaque barre latérale 71 de l'assise 7 comporte un doigt de guidage 73 agencé pour se translater dans la troisième rainure de guidage 54 du châssis inférieur 5. La troisième rainure de guidage 54 permet de guider la course horizontale de l'assise 7 entre les positions de travail PT et de repos PR. En référence à la figure 3, chaque doigt de guidage 73 de l'assise 7 est rectiligne et s'étend transversalement en direction de son support 51 depuis l'extrémité arrière de chaque barre latérale 71 de l'assise 7.

Le doigt de guidage 73 de l'assise 7 possède une épaisseur sensiblement égale à celle des premiers et deuxièmes doigts de guidage 64, 65 de la partie inferieure 6 du dossier. La troisième rainure de guidage 54 comporte, contrairement aux première et deuxième rainures de guidage 52, 53, une épaisseur plus large que celle du doigt 73 qu'elle guide. Dans cet exemple, la troisième rainure de guidage 54 comporte une épaisseur sensiblement deux fois plus grande que celle du doigt de guidage 73 de l'assise 7 comme représenté sur la figure 3. Cela permet, de manière avantageuse, un pivotement de l'assise 7 vers le dossier autour de l'axe pivot B comme représenté par la flèche P sur la figure 3. Le pivotement de l'assise 7 permet avantageusement de libérer de l'espace à l'avant du siège 1, par exemple, pour permettre le passage de personnes à mobilité réduite. Ainsi, le doigt de guidage 73 de l'assise 7 est en contact avec le bord supérieur de la troisième rainure de guidage 54 lors l'utilisation du siège (assise horizontale) tandis que le doigt de guidage 73 de l'assise 7 est en contact avec le bord inférieur de la troisième rainure de guidage 54 lorsque l'assise 7 est relevée (assise verticale).

Lorsque le doigt de guidage 73 de l'assise 7 est en butée avant dans la troisième rainure de guidage 54, le siège 1 est en position de repos PR tandis qu'il est en position de travail PT lorsque le doigt de guidage 73 de l'assise 7 est en butée arrière.

De manière préférée, pour faciliter la manipulation du siège 1, il est prévu au moins un vérin 10, de préférence pneumatique, dont une première extrémité est fixée à l'assise 7 et dont une deuxième extrémité est fixée au châssis. Dans cet exemple, en référence à la figure 3, un vérin pneumatique 10 est fixé à chaque barre latérale 71 de l'assise 7 et s'étend parallèlement à cette dernière. De manière préférée, le vérin pneumatique 10 possède une longueur plus importante en position de repos PR qu'en position de travail PT. Le siège 1 comporte de manière avantageuse des moyens de commande (non représentés) pour contrôler la longueur du vérin 10 et faciliter ainsi la manipulation du siège 1 entre les positions de repos PR et de travail PT. De manière avantageuse, comme l'assise 7 et les parties 4, 6 du siège 1 sont articulées, il suffit de déplacer l'assise 7 pour modifier la position du siège 1.

### • Mise en oeuvre

La manipulation du siège 1 entre ses différentes positions va être maintenant présentée en référence aux figures 4A et 4B.

En référence à la figure 4B, lorsque le siège est en position de travail PT, l'assise 7 est reculée de manière à ce que le troisième doigt de guidage 73 soit en butée arrière dans la troisième rainure de guidage 54 du châssis inférieur 5. De manière similaire, les premiers et deuxièmes doigts de guidage 64, 65 sont en butée supérieure dans leurs première et deuxième rainures de guidage 52, 53. En position de travail PT, les parties inférieure 6 et supérieure 4 du dossier sont alignées de manière similaire à l'art antérieur ce qui permet de former un dossier droit. En position de travail PT, l'angle du siège β_{T} est de l'ordre de 115° et la distance horizontale d'avancée D_{T} du siège 1 est minimale comme représenté sur la figure 4B. Pour permettre le passage d'une personne à mobilité réduite, l'assise 7 peut être relevée vers le dossier par pivotement autour de l'axe de pivot B ce qui est possible du fait du jeu en translation entre le troisième doigt de guidage 73 et la troisième rainure de guidage 54.

Pour modifier la position du siège 1, le passager commande les vérins pneumatiques 10, par exemple au moyen d'un bouton installé dans un accoudoir du siège 1, de manière à ce que ces derniers s'allongent. De manière préférée, les vérins pneumatiques ne sont pas commandés par le passager mais dimensionnés pour faciliter le passage du siège de la position de repos PR à la position de travail PT, les vérins fournissant une aide passive.

Au fur et à mesure de l'allongement des vérins 10, les doigts de guidage 64, 65, 73 se translatent dans leurs rainures de guidage 52, 53, 54 respectives ce qui a pour effet d'avancer l'assise 7. La partie supérieure 4 du dossier étant guidée dans le châssis supérieur 3, l'angle formé entre les parties inférieure 6 et supérieure 4 du dossier augmente du fait de la rotation de la partie inférieure 6 du dossier autour de l'axe A. De manière similaire, l'assise 7 étant guidée dans le châssis inférieur 5, l'angle β formé entre la partie inférieure 6 du dossier et l'assise 7 augmente du fait de la rotation de la partie inférieure 6 du dossier autour de l'axe B. Autrement dit, la partie inférieure 6 du dossier permet de former un siège 1 de courbure régulière ce qui assure un confort optimal en position de repos tout en limitant l'avancée de l'assise 7. En effet, la partie inférieure 6 du dossier permet avantageusement de participer au maintien horizontal du passager en position de repos PR.

En référence à la figure 4A, lorsque le siège 1 est en position de repos PR, l'assise 7 est avancée de manière à ce que le troisième doigt de guidage 73 soit en butée avant dans la troisième rainure de guidage 54 du châssis inférieur 5. De manière similaire, les premiers et deuxièmes doigts de guidage 64, 65 sont en butée inférieure dans leurs première et deuxième rainures de guidage 52, 53 en position de repos PR. En position de repos PR, l'angle du siège β_{R} est de l'ordre de 125° et la distance horizontale d'avancée D_{R} du siège 1 est maximale comme représenté sur la figure 4A. De manière similaire, pour permettre le passage d'une personne à mobilité réduite, l'assise 7 peut être relevée vers le dossier par pivotement autour de l'axe de pivot B ce qui est possible du fait du jeu en translation entre le troisième doigt de guidage 73 et la troisième rainure de guidage 54.

### Support lombaire 11

De manière préférée, le siège 1 comporte un support lombaire 11 monté entre les barres transversale 61 de la partie inférieure 6 du dossier comme représenté sur la figure 3. Un tel support lombaire 11 est connu en soi de l'homme du métier et ne sera pas détaillé plus en avant. Le support lombaire 11 peut avantageusement être commandé pour exercer un appui lombaire de valeur déterminée.

Selon un aspect de l'invention, le siège 1 comporte un câble de commande (non représenté) reliant le support lombaire 11 à des moyens de commande du siège (non représentés), de préférence, installé dans un accoudoir du siège 1. De manière classique, l'appui lombaire est fonction de la tension du câble. Les moyens de commande permettent avantageusement de régler la tension du câble et, par voie de conséquence, la valeur de l'appui lombaire.

Selon un autre aspect de l'invention, le siège 1 comporte un câble de commande (non représenté) reliant le support lombaire 11 à la partie supérieure 4 du dossier. Il en résulte que la tension du câble est modifiée en fonction des variations de distance entre les parties inférieure 6 et supérieure 4 du dossier. En d'autres termes, la tension du câble de commande est modifiée en fonction de la position du siège 1. Par connaissance, d'une part, de la plage de variation de la longueur du câble de commande entre les positions de travail PT et de repos PR et, d'autre part, de la plage de variation d'appui lombaire entre les positions de travail PT et de repos PR, on peut régler la tension du câble de commande de manière à ce que la valeur de l'appui lombaire soit ajustée en fonction de la position du siège 1. Autrement dit, le réglage de l'appui lombaire est automatique et il n'est pas nécessaire de prévoir des moyens de commande dédiés dans le siège 1, la commande de l'appui lombaire étant lié à la commande de la position du siège 1 ce qui est avantageux.

## Revendications

1. Siège (1) de passager pour véhicule de transport, notamment ferroviaire, comportant un châssis structural (2, 3, 5), une assise (7) et un dossier articulé sur l'assise (7), l'assise (7) et le dossier étant guidés par le châssis structural (2, 3, 5), le dossier comportant au moins une partie supérieure (4) et une partie inférieure (6) articulées entre elles, la partie inférieure (6) du dossier étant articulée sur l'assise (7) autour d'une liaison pivot (B) et guidée dans le châssis structural (2, 3, 5) entre au moins une position de travail (PT) et au moins une position de repos (PR) du siège (1), l'angle d'ouverture (β) du siège (1), définie entre la partie inférieure (6) du dossier et l'assise (7), étant supérieure en position de repos (PR) qu'en position de travail (PT), siège **caractérisé en ce que** le châssis structural (5) comporte au moins deux rainures de guidage du dossier (52, 53), et **en ce que** la partie inférieure (6) du dossier comporte au moins un doigt de guidage (64, 65) monté dans chaque rainure de guidage du dossier (52, 53), lesdits doigts de guidage (64, 65) étant agencés pour se translater dans lesdites rainures de guidage du dossier (52, 53) pour définir la position angulaire de la partie inférieure (6) du dossier lors de son guidage entre la position de travail (PT) et la position de repos (PR).

2. Siège selon la revendication 1, dans lequel, l'épaisseur d'un doigt de guidage (64, 65) est sensiblement égale à celle de la rainure de guidage du dossier (52, 53) dans laquelle il est monté.

3. Siège selon l'une des revendications 1 à 2, dans lequel le châssis structural (5) comporte au moins deux supports latéraux (51), chaque support latéral (51) comportant deux rainures de guidage du dossier (52, 53).

4. Siège selon l'une des revendications 1 à 3, dans lequel la partie supérieure (4) du dossier est reliée à la partie inférieure (6) du dossier par une liaison pivot (A).

5. Siège selon l'une des revendications 1 à 4, dans lequel le siège (1) comporte des moyens de pivotement de l'assise (7) vers le dossier du siège (1) pour une position donnée du siège (1).

6. Siège selon l'une des revendications 1 à 5, dans lequel le châssis structural (5) comporte au moins une rainure de guidage de l'assise (54) agencée pour guider la course de l'assise (7) lors de son guidage entre la position de travail (PT) et la position de repos (PR).

7. Siège selon la revendication 6, dans lequel, l'assise (7) comportant au moins un doigt de guidage (73) monté dans la rainure de guidage de l'assise (54), l'épaisseur du doigt de guidage (73) est inférieure à celle de la rainure de guidage de l'assise (54) de manière à autoriser un pivotement de l'assise (7).

8. Siège selon l'une des revendications 1 à 7, dans lequel, le siège (1) comporte un vérin (10) monté entre l'assise (7) et le châssis structural agencé pour déplacer l'assise (7) entre la position de travail (PT) et la position de repos (PR).

9. Siège selon l'une des revendications 1 à 8, dans lequel la partie inférieure (6) du dossier comporte au moins deux barres latérales parallèles (61) qui sont incurvées.

10. Siège selon l'une des revendications 1 à 9, dans lequel la partie supérieure (4) du dossier est adaptée pour translater par rapport au châssis structural (3).

## Patentansprüche

1. Passagiersessel (1) für ein Transportfahrzeug, insbesondere ein Schienenfahrzeug, umfassend eine Gestell-Struktur (2, 3, 5), eine Sitzfläche (7) und eine mit der Sitzfläche (7) artikulierte Rückenlehne, wobei die Sitzfläche (7) und die Rückenlehne von der Gestell-Struktur (2, 3, 5) geführt werden, und wobei die Rückenlehne aus mindestens einem oberen Teil (4) und einem unteren Teil (6) besteht, die eines gegenüber dem anderen artikuliert sind, wo der untere Teil (6) der Rückenlehne mit der Sitzfläche (7) um eine Schwenkverbindung (B) herum artikuliert und in der Gestell-Struktur (2, 3, 5) zwischen mindestens einer Arbeitsposition (PT) und mindestens einer Ruheposition (PR) des Sitzes (1) geführt wird, wobei der Öffnungswinkel (β) des Sitzes (1), der zwischen dem unteren Teil (6) der Rückenlehne und der Sitzfläche (7) definiert ist, in der Ruheposition (PR) größer ist als in der Arbeitsposition (PT), und wobei der Sessel **dadurch gekennzeichnet ist, dass** die Gestell-Struktur (5) mindestens zwei Führungsrillen der Rückenlehne (52, 53) umfasst, und dass besagter untere Teil (6) der Rückenlehne mindestens einen Führungsstift (64, 65) umfasst, der in jede Führungsrille der Rückenlehne (52, 53) montiert ist, wobei die besagten Führungsstifte (64, 65) so angeordnet sind, dass sie sich in die besagten Führungsrillen der Rückenlehne (52, 53) verschieben, um die Winkelposition des unteren Teils (6) der Rückenlehne während der Führung zwischen der Arbeitsposition (PT) und der Ruheposition (PR) zu definieren.

2. Sessel gemäß Anspruch 1, in dem die Dicke eines Führungsstifts (64, 65) spürbar identisch mit der Dicke der Führungsrille der Rückenlehne (52, 53) ist, in der er montiert ist.

3. Sessel gemäß einem der Ansprüche 1 bis 2, in dem die Gestell-Struktur (5) mindestens zwei laterale Träger (51) umfasst, wo jeder laterale Träger (51) zwei Führungsrillen der Rückenlehne (52, 53) umfasst.

4. Sessel gemäß einem der Ansprüche 1 bis 3, in dem der obere Teil (4) der Rückenlehne über eine Schwenkverbindung (A) mit dem unteren Teil (6) der Rückenlehne verbunden ist.

5. Sessel gemäß einem der Ansprüche 1 bis 4, in dem der Sessel (1) für eine bestimmte Position des Sessels (1) Mittel zum Schwenken der Sitzfläche (7) zur Rückenlehne des Sessels (1) umfasst.

6. Sessel gemäß einem der Ansprüche 1 bis 5, in dem die Gestell-Struktur (5) mindestens eine Führungsrille der Rückenlehne (54) umfasst, die angeordnet ist, um den Weg der Sitzfläche (7) während ihrer Führung zwischen der Arbeitsposition (PT) und der Ruheposition (PR) zu begleiten.

7. Sessel gemäß Anspruch 6, in dem die Sitzfläche (7) mindestens einen Führungsstift (73) umfasst, der in der Führungsrille der Rückenlehne (54) montiert ist, und wo die Dicke des Führungsstifts (73) geringer ist als die der Führungsrille der Rückenlehne (54), um so das Schwenken der Sitzfläche (7) zu ermöglichen.

8. Sessel gemäß einem der Ansprüche 1 bis 7, wo der Sessel (1) einen zwischen der Sitzfläche (7) und der Gestell-Struktur montierten Zylinder (10) umfasst, der so angeordnet ist, um die Sitzfläche (7) zwischen der Arbeitsposition (PT) und der Ruheposition (PR) zu verschieben.

9. Sessel gemäß einem der Ansprüche 1 bis 8, in dem der untere Teil (6) der Rückenlehne mindestens zwei laterale, parallele Stangen (61) umfasst, die gekrümmt sind.

10. Sessel gemäß einem der Ansprüche 1 bis 9, in dem der obere Teil (4) der Rückenlehne geeignet ist, sich in Bezug auf die Gestell-Struktur (3) zu verschieben.

## Claims

1. Passenger seat (1) for a transport vehicle, in particular a railway transport vehicle, comprising a structural frame (2, 3, 5), a base (7) and a backrest articulated on the base (7), the base (7) and with the backrest being guided by the structural frame (2, 3, 5), with the backrest comprising at least one upper part (4) and a lower part (6) articulated between them, the lower part (6) of the backrest being articulated on the base (7) about a pivot connection (B) and guided in the structural frame (2, 3, 5) between at least one working position (PT) and at least one rest position (PR) of the seat (1), the opening angle (β) of the seat (1), defined between the lower part (6) of the backrest and the base (7), being greater in rest position (PR) than in working position (PT), seat **characterised in that** the structural frame (5) comprises at least two guiding grooves of the backrest (52, 53), and **in that** the lower part (6) of the backrest comprises at least one guiding finger (64, 65) mounted in each guiding groove of the backrest (52, 53), said guiding fingers (64, 65) being arranged to be relocated in said guiding grooves of the backrest (52, 53) in order to define the angular position of the lower part (6) of the backrest during the guiding thereof between the working position (PT) and the rest position (PR).

2. Seat according to claim 1, wherein, the thickness of a guiding finger (64, 65) is substantially equal to that of the guiding groove of the backrest (52, 53) wherein it is mounted.

3. Seat according to one of claims 1 to 2, wherein the structural frame (5) comprises at least two lateral supports (51), each lateral support (51) comprising two guiding grooves of the backrest (52, 53).

4. Seat according to one of claims 1 to 3, wherein the upper part (4) of the backrest is connected to the lower part (6) of the backrest by a pivot connection (A).

5. Seat according to one of claims 1 to 4, wherein the seat (1) comprises means of pivoting the base (7) towards the backrest of the seat (1) for a given position of the seat (1).

6. Seat according to one of claims 1 to 5, wherein the structural frame (5) comprises at least one guiding groove of the base (54) arranged to guide the course of the base (7) during the guiding thereof between the working position (PT) and the rest position (PR).

7. Seat according to claim 6, wherein, the base (7) comprising at least one guiding finger (73) mounted in the guiding groove of the base (54), the thickness of the guiding finger (73) is less than that of the guiding groove of the base (54) in such a way as to authorise a pivoting of the base (7).

8. Seat according to one of claims 1 to 7, wherein, the seat (1) comprises a cylinder (10) mounted between the base (7) and the structural frame arranged to displace the base (7) between the working position (PT) and the rest position (PR).

9. Seat according to one of claims 1 to 8, wherein the lower part (6) of the backrest comprises at least two parallel lateral bars (61) which are curved.

10. Seat according to one of claims 1 to 9, wherein the upper part (4) of the backrest is adapted to be relocated with respect to the structural frame (3).
